(19) Europäisches Patentamt
European Patent Office
Office européen des brevets

(11) **EP 4 340 068 A1**

(12) **EUROPEAN PATENT APPLICATION**
published in accordance with Art. 153(4) EPC

(43) Date of publication:
**20.03.2024 Bulletin 2024/12**

(21) Application number: **22899028.9**

(22) Date of filing: **23.11.2022**

(51) International Patent Classification (IPC):
$H01M\ 4/48$ (2010.01)     $H01M\ 4/36$ (2006.01)
$H01M\ 10/052$ (2010.01)     $H01M\ 4/02$ (2006.01)

(52) Cooperative Patent Classification (CPC):
**H01M 4/02; H01M 4/36; H01M 4/48; H01M 10/052;
Y02E 60/10**

(86) International application number:
**PCT/KR2022/018619**

(87) International publication number:
**WO 2023/096346 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2021  KR 20210164661
22.03.2022  KR 20220035378**

(71) Applicant: **LG Energy Solution, Ltd.
Seoul 07335 (KR)**

(72) Inventors:
• **PARK, Semi
Daejeon 34122 (KR)**

• **LEE, Yong Ju
Daejeon 34122 (KR)**
• **CHOI, Junghyun
Daejeon 34122 (KR)**
• **SHIN, Sun Young
Daejeon 34122 (KR)**
• **PARK, Heeyeon
Daejeon 34122 (KR)**
• **OH, Ilgeun
Daejeon 34122 (KR)**

(74) Representative: **Hoffmann Eitle
Patent- und Rechtsanwälte PartmbB
Arabellastraße 30
81925 München (DE)**

(54) **NEGATIVE ELECTRODE ACTIVE MATERIAL, NEGATIVE ELECTRODE, AND SECONDARY BATTERY**

(57) The present invention relates to a negative electrode active material including silicon-based oxide particles, in which the silicon-based oxide particles include Li and Mg, a content of Li is larger than a content of Mg, and a content of Mg is more than 0 wt% and 0.5 wt% or less based on 100 wt% of the negative electrode active material, a negative electrode including the negative electrode active material, and a secondary battery including the negative electrode.

EP 4 340 068 A1

**Description**

[Technical Field]

The present specification claims priority to and the benefit of Korean Patent Application Nos. 10-2021-0164661 and 10-2022-0035378 filed in the Korean Intellectual Property Office on November 25, 2021 and March 22, 2022, respectively, the entire contents of which are incorporated herein by reference.

The present invention relates to a negative electrode active material, a negative electrode including the negative electrode active material and a secondary battery including the negative electrode.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more. Recently, the demand for secondary batteries as an energy source has been rapidly increasing as the technical development and the demand for portable devices such as portable computers, portable telephones, and cameras increase. Among such secondary batteries, lithium secondary batteries having a high energy density, that is, high capacity have been extensively studied, commercialized and widely used.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used. However, as the need for the performance of lithium secondary batteries is steadily increasing, there is a need for continuous improvement in battery materials including negative electrode active materials.

[Citation List]

[Patent Literature]

Korean Patent Application Laid-Open No. 10-2019-0030676

[Detailed Description of the Invention]

[Technical Problem]

The present invention has been made in an effort to provide a negative electrode active material capable of providing a battery with improved initial efficiency characteristics and swelling characteristics, a negative electrode including the negative electrode active material and a secondary battery including the negative electrode.

[Technical Solution]

An exemplary embodiment of the present invention provides a negative electrode active material including silicon-based oxide particles, in which the silicon-based oxide particles include Li and Mg, a content of Li is larger than a content of Mg, and a content of Mg is more than 0 wt% and 0.5 wt% or less based on 100 wt% of the negative electrode active material.

According to an exemplary embodiment of the present invention, the content of Li is 1 wt% or more and 15 wt% or less based on 100 wt% of the negative electrode active material.

According to an exemplary embodiment of the present invention, the silicon-based oxide particles further include at least one of a carbon layer; an aluminum phosphate layer; a lithium phosphate layer; and an aluminum phosphate and lithium phosphate layer provided on at least a part of the surface thereof.

An exemplary embodiment of the present invention provides a negative electrode including the negative electrode active material.

An exemplary embodiment of the present invention provides a secondary battery including the negative electrode.

[Advantageous Effects]

Negative electrode active materials according to exemplary embodiments of the present invention include silicon-based oxide particles containing both Li and Mg, and thus can be used as high-efficiency materials.

Specifically, the silicon-based oxide particles are materials having a higher capacity than graphite-based materials, and have an advantage in that cycle service life is excellent and electrode expansion is low compared to silicon alloys or silicon-carbon materials.

In addition, by including Li, the initial efficiency of a battery can be increased by reacting Li with $SiO_2$ in advance, which causes Li to be irreversible during initial charging and discharging. Furthermore, by additionally including Mg, the swelling characteristics can be improved compared to the case of doping with only Li.

The negative electrode active material according to exemplary embodiments of the present invention can improve not only the initial efficiency but also the swelling characteristics by including the contents of Li and Mg within a specific range.

[Best Mode]

Hereinafter, the present invention will be described in more detail in order to help the understanding of the present invention.

The terms or words used in the present specification and the claims should not be construed as being limited to typical or dictionary meanings, and should be construed as meanings and concepts conforming to the technical spirit of the present invention on the basis of the principle that an inventor can appropriately define concepts of the terms in order to describe his or her own invention in the best way.

The terms used in the present specification are used only to describe exemplary embodiments, and are not intended to limit the present invention. Singular expressions include plural expressions unless the context clearly indicates otherwise.

In the present invention, the term "comprise", "include", or "have" is intended to indicate the presence of the characteristic, number, step, constituent element, or any combination thereof implemented, and should be understood to mean that the possibility of the presence or addition of one or more other characteristics or numbers, steps, constituent elements, or any combination thereof is not precluded.

In the present specification, 'p to q' means a range of 'p or more and q or less'.

In the present specification, an average particle diameter ($D_{50}$) may be defined as a particle diameter corresponding to 50% of a cumulative volume in a particle diameter distribution curve of the particles. The average particle diameter ($D_{50}$) may be measured using, for example, a laser diffraction method. The laser diffraction method can generally measure a particle diameter of from the submicron region to about several mm, and results with high reproducibility and high resolution may be obtained.

In the present specification, the specific surface area of the silicon-based oxide particle may be measured by a Brunauer-Emmett-Teller (BET) method. For example, the specific surface area of the silicon-based oxide particle may be measured by a BET six-point method by a nitrogen gas adsorption distribution method using a porosimetry analyzer (Bell Japan Inc., Belsorp-II mini).

In the present specification, the contents of Mg and Li in the negative electrode active material can be confirmed through inductively coupled plasma (ICP) analysis. For example, for the ICP analysis, after a predetermined amount (about 0.01 g) of the negative electrode active material is exactly aliquoted, the negative electrode active material is completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in intrinsic wavelengths of the Mg and Li elements using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the concentration of the Mg or Li in the particles may be analyzed by converting the total sum so as to be the theoretical value.

In the present specification, the content of Mg in the negative electrode active material can also be confirmed through X-ray fluorescence (XRF) analysis.

**<Negative electrode active material>**

The negative electrode active material according to an exemplary embodiment of the present invention is a negative electrode active material including silicon-based oxide particles, in which the silicon-based oxide particles include Li and Mg, a content of Li is larger than a content of Mg, and a content of Mg is more than 0 wt% and 0.5 wt% or less based on 100 wt% of the negative electrode active material.

The negative electrode active material according to the exemplary embodiment includes silicon-based oxide particles including both Mg and Li, but the content of Li in each particle is larger than the content of Mg. In this case, it is more advantageous in improving the initial efficiency when the negative electrode active material is applied to a battery.

Specifically, in the case of Mg, as the content (doping amount) increases, the initial efficiency increases, but the discharge capacity tends to significantly decrease. The case of Li also follows the same tendency, but the atomic weight relative to Mg is small, and thus even though the initial efficiency is the same, the discharge capacity tends to be measured a little higher. In this aspect, it is advantageous that the content of Li is higher than the content of Mg.

In the silicon-based oxide particles, the content of Mg is characterized by being more than 0 wt% and 0.5 wt% or less based on 100 wt% of the negative electrode active material. The silicon-based oxide particles essentially include Mg, and when the content thereof is 0.5 wt% or less, the swelling characteristics may be improved without adversely affecting the capacity improvement and initial efficiency improvement of the negative electrode.

Specifically, the silicon-based oxide particles including Li are restricted from swelling in the electrolyte solution, but when the silicon-based oxide particles include Mg, the swelling characteristics are improved compared to the case of doping with only Li. However, when the content of Mg exceeds 0.5 wt%, a side reaction between the silicon-based oxide particles and the electrolyte solution greatly occurs, so that cycle performance deteriorates. Therefore, when the content of Mg is 0.5 wt% or less, the swelling characteristics may be improved without adversely affecting the capacity improvement and initial efficiency improvement of the negative electrode.

According to an exemplary embodiment, the content of Mg may be more than 0 wt% and 0.5 wt% or less based on 100 wt% of the negative electrode active material.

According to an exemplary embodiment, the content of Mg may be more than 0 wt% and 0.4 wt% or less based on 100 wt% of the negative electrode active material.

According to an exemplary embodiment, the content of Mg may be 0.001 wt% or more and 0.3 wt% or less based on 100 wt% of the negative electrode active material.

According to an exemplary embodiment, the content of Mg may be 0.001 wt% or more and 0.2 wt% or less based on 100 wt% of the negative electrode active material.

According to an exemplary embodiment of the present invention, the content of Li may be, based on 100 wt% of the entire negative electrode active material, 1 wt% or more and 15 wt% or less, and is more preferably 1.5 wt% or more and 13 wt% or less, for example, 3 wt% or more and 10 wt% or less. When the Li content is 1 wt% or more, it is advantageous in increasing the initial efficiency of the battery, and when the Li content is 15 wt% or less, it is advantageous in terms of slurry processability.

Specifically, the resulting lithium silicate is basic in an aqueous system, and when the basicity is strong, there may occur a problem that the viscosity of the slurry is reduced. When the Li content is 15 wt% or less, the resulting Li silicate does not show strong basicity in an aqueous system, so that it is advantageous because the viscosity of the slurry can be appropriately maintained. In addition, a base reacts with Si to generate $H_2$ gas, which may cause craters and pinholes (a phenomenon in which the current collector is exposed without being coated) on the electrode surface during electrode coating, and in the above content range, basicity is so weak that electrode surface characteristics may be improved during electrode coating.

According to an exemplary embodiment of the present invention, the Mg/Li weight ratio of the negative electrode active material may be more than 0 and 0.09 or less. Furthermore, the weight ratio may be more than 0 and 0.08 or less, and may be more than 0.001 and 0.08 or less.

According to an exemplary embodiment, the silicon-based oxide particles may include $SiO_x$ (0<x<2) as a silicon-based oxide component. The $SiO_x$ (0<x<2) may correspond to a matrix in the silicon-based oxide particles. The $SiO_x$ (0<x<2) may be in a form including Si and $SiO_2$, and the Si may also form a phase. That is, the x corresponds to the number ratio of O for Si included in the $SiO_x$ (0<x<2). When the silicon-based oxide particles include the $SiO_x$ (0<x<2), the discharge capacity of a secondary battery may be improved.

According to an exemplary embodiment of the present invention, the Mg may be present as a Mg compound phase. The Mg compound phase may include at least any one selected from the group consisting of, for example, Mg silicates, Mg silicides and Mg oxides. The Mg silicate may include at least any one of $Mg_2SiO_4$ and $MgSiO_3$. The Mg silicide may include $Mg_2Si$. The Mg oxide may include MgO.

According to an exemplary embodiment, the Mg compound phase may include Mg silicates, and the Mg silicates may be included in an amount of 40 wt% or more based on 100 wt% of the Mg compound phase. The Mg silicates may be included in an amount of 60 wt% or more, and 80 wt% or more, based on 100 wt% of the Mg compound phase.

According to an exemplary embodiment, the Mg silicates may include $MgSiO_3$, and $MgSiO_3$ may be included in an amount of 40 wt% or more based on 100 wt% of the Mg compound phase. The $MgSiO_3$ may be included in an amount of 60 wt% or more, and 80 wt% or more, based on 100 wt% of the Mg compound phase.

According to another exemplary embodiment of the present invention, the Li may be present as a Li compound phase. The Li compound phase may include at least any one selected from the group consisting of, for example, lithium silicates, lithium silicides and lithium oxides.

According to an exemplary embodiment, the Li compound phase may include lithium silicates, and the lithium silicates may be, for example, represented by $Li_aSi_bO_c$ ($2 \le a \le 4$, $0 < b \le 2$, $2 \le c \le 5$), and may include one or more selected from the group consisting of $Li_2SiO_3$, $Li_2Si_2O_5$, $Li_3SiO_3$ and $Li_4SiO_4$.

According to an exemplary embodiment, the lithium silicates may be included in an amount of 40 wt% or more, 60 wt% or more, and 80 wt% or more, based on 100 wt% of the Li compound phase.

According to an exemplary embodiment, the lithium silicates may include $Li_2SiO_3$ and $Li_2Si_2O_5$. The $Li_2SiO_3$ and $Li_2Si_2O_5$ may be included in an amount of 40 wt% or more, 60 wt% or more, and 80 wt% or more, based on 100 wt% of the Li compound phase.

The Mg compound and the Li compound are in a form in which particles of the silicon-based oxide are doped with the compound(s), and may be distributed on the surface and/or inside of the silicon-based compound particle. The Mg compound and the Li compound are distributed on the surface and/or inside of the silicon-based oxide particle, and thus may control the volume expansion/contraction of the silicon-based oxide particles to an appropriate level, and may serve to prevent damage to the active material. Further, the Mg compound and the Li compound may be contained in terms of reducing the ratio of the irreversible phase (for example, $SiO_2$) of the silicon-based oxide particles to increase the efficiency of the active material.

According to an exemplary embodiment of the present invention, the silicon-based oxide particles may further include at least one of a carbon layer; an aluminum phosphate layer; a lithium phosphate layer; and an aluminum phosphate and lithium phosphate layer provided on at least a part of the surface thereof.

According to an exemplary embodiment, the silicon-based oxide particles may further include a carbon layer.

The carbon layer may cover the entire surface of the silicon-based oxide particles, but may cover only a portion of the surface. Conductivity is imparted to the silicon-based oxide particles by the carbon layer, and the volume change of a negative electrode active material including the silicon-based oxide particles may be effectively suppressed. In addition, the slurry processability may be improved by suppressing reactions between lithium silicates and water in a water-based mixing process. Accordingly, the service life characteristics of a battery may be improved.

According to an exemplary embodiment, the carbon layer may include at least any one of amorphous carbon and crystalline carbon.

The crystalline carbon may further improve the conductivity of the silicon-based oxide particles. The crystalline carbon may include at least any one selected from the group consisting of fullerene, carbon nanotube and graphene.

The amorphous carbon may suppress the expansion of the silicon-based oxide particles by appropriately maintaining the strength of the carbon layer. The amorphous carbon may be a carbide of at least one substance selected from the group consisting of tar, pitch and other organic materials, or may be a carbon-based material formed using a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane, or the like. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment, the carbon layer may be included in an amount of 1 wt% to 50 wt%, specifically 2 wt% to 30 wt%, and more specifically 3 wt% to 15 wt%, based on 100 wt% of the negative electrode active material. When the above range is satisfied, the conductivity of the negative electrode active material is improved, and the volume change of the negative electrode active material during the charging and discharging of a battery is readily suppressed, so that the service life characteristics of the battery may be improved.

In an exemplary embodiment, the carbon layer may have a thickness of 1 nm to 500 nm, specifically 5 nm to 300 nm. When the above range is satisfied, the volume change of the negative electrode active material is readily suppressed and side reactions between an electrolyte solution and the negative electrode active material are suppressed, so that the service life characteristics of a battery may be improved.

According to an exemplary embodiment, the silicon-based oxide particles may further include an aluminum phosphate layer.

The aluminum phosphate layer may include $AlPO_4$.

According to an exemplary embodiment, the silicon-based oxide particles may further include a lithium phosphate layer.

The lithium phosphate layer may include $Li_3PO_4$.

According to an exemplary embodiment, the silicon-based oxide particles may further include aluminum phosphate and lithium phosphate layers. That is, the silicon-based oxide particles may further include a layer including both aluminum phosphate and lithium phosphate.

The aluminum phosphate and lithium phosphate layers may include $Li_3PO_4$ and $AlPO_4$.

In an exemplary embodiment, the Al may be included in an amount of 0.01 wt% to 0.5 wt% based on 100 wt% of the negative electrode active material, and the P may be included in an amount of 0.01 wt% to 1.5 wt% based on 100 wt% of the negative electrode active material. When the above range is satisfied, there is an advantage in that the slurry processability is improved by suppressing reactions between lithium silicates and water in a water-based mixing process.

According to an exemplary embodiment of the present invention, the silicon-based oxide particles may have an average particle diameter ($D_{50}$) of 1 um to 30 um. The silicon-based oxide particles may have an average particle diameter ($D_{50}$) of specifically 2 um to 20 $\mu$m, and more specifically 3 um to 10 um. When the above range is satisfied, side reactions between the negative electrode active material and an electrolyte solution may be controlled, and the discharge capacity and initial efficiency of the battery may be effectively implemented.

According to yet another exemplary embodiment of the present invention, the silicon-based oxide particles may have a BET specific surface area of 0.5 $m^2/g$ to 60 $m^2/g$. The silicon-based oxide particles may have a BET specific surface area of specifically 0.5 $m^2/g$ to 20 $m^2/g$, and more specifically 0.8 $m^2/g$ to 10 $m^2/g$. When the above range is satisfied, side reactions between an electrolyte solution and the negative electrode active material during the charging and discharging of a battery are reduced, so that the service life characteristics of the battery may be improved.

According to an exemplary embodiment of the present invention, the silicon-based oxide particles may further include Si crystal grains. The Si crystal grains may have a particle diameter of 1 nm to 15 nm.

The crystal size of the Si crystal grains may be calculated using an X-ray diffraction (XRD) analysis method.

<Method for preparing negative electrode active material>

The negative electrode active material according to the above-described embodiments may be manufactured by a method including doping silicon-based oxide particles with Mg and/or Li.

As an example, the silicon-based oxide particles including Mg may use an in-situ doping method. In one example, in the preparing of the silicon-based oxide particles including Mg, the silicon-based oxide particles may be formed through forming a mixed gas by vaporizing a powder in which a Si powder and a $SiO_2$ powder are mixed and Mg, respectively, and then mixing the vaporized powder and Mg, and heat-treating the mixed gas in a vacuum state at 800°C to 950°C. As another example, in the preparing of the silicon-based oxide particles including Mg, the silicon-based oxide particles may be formed through forming a mixed gas by mixing a powder in which a Si powder and a $SiO_2$ powder are mixed and Mg, and then vaporizing the powder and Mg; and heat-treating the mixed gas in a vacuum state at 800°C to 950°C.

The mixed powder of the Si powder and the $SiO_2$ powder may be vaporized by performing the heat treatment at 1,000°C to 1,800°C or 1,200°C to 1,500°C, and the Mg powder may be vaporized by performing the heat treatment at 500°C to 1,200°C or 600°C to 800°C. By allowing the materials to react in a gas state as described above, Mg may be uniformly distributed in the silicon-based oxide particles. In the silicon-based oxide particles, the Mg compound phase may include the above-described Mg silicates, Mg silicides, Mg oxides, and the like. The particle diameter of the silicon-based oxide particles including Mg produced by the method described above may be adjusted by a pulverization method such as a mechanical milling method, if necessary.

As an example, silicon-based oxide particles including Li may be doped by an ex-situ doping method. For example, the distributing of the Li in the silicon-based oxide particles may include forming a carbon layer on the surface of silicon-based oxide particles, and doping the silicon-based oxide particles with Li.

Before or after the carbon layer is formed, the particle diameter of the silicon-based oxide particles may be adjusted by a pulverization method such as a mechanical milling method, if necessary.

The forming of the carbon layer on the surface of the silicon-based oxide particles may be performed by a method of injecting a carbon-based raw material gas such as methane gas and performing a heat treatment in a rotary tubular furnace. Specifically, a carbon layer may be formed by introducing the silicon-based oxide particles into a rotary tubular furnace, increasing the temperature to 800°C to 1,150°C, 900°C to 1,050°C, or 950°C to 1,000°C at a rate of 3 to 10°C/min or about 5°C/min, flowing an argon gas and a carbon-based material raw material gas while rotating the rotary tubular furnace, and performing a heat treatment for 30 minutes to 8 hours.

The distributing of the Li in the silicon-based oxide particles on which the carbon layer is formed may be performed by mixing silicon-based oxide particles with a lithium metal powder or a lithium precursor, for example, LiOH, and $Li_2O$, and performing heat-treating the resulting mixture at 400°C to 1400°C, if necessary. Alternatively, the step may be performed using an electrochemical method.

As an example, the method for preparing a negative electrode active material may include forming at least one of an aluminum phosphate layer; a lithium phosphate layer; and an aluminum phosphate and lithium phosphate layer on at least a part of the surface of the silicon-based oxide particles.

In the aluminum phosphate layer; the lithium phosphate layer; and the aluminum phosphate and lithium phosphate layer, a coating layer may be formed by mixing the silicon-based oxide particles with one or more selected from the group consisting of an aluminum phosphate-based compound, an aluminum precursor, a phosphorus precursor and an Li-Al-P-O-based compound.

The method of forming a coating layer by mixing may include a method of performing a coating treatment by dry-mixing a mixture and heat-treating the resulting mixture or a method of performing a coating treatment by mixing in a solvent and then reacting the resulting mixture while evaporating the solvent.

Specifically, the method may include a method of performing a coating treatment by dry-mixing the silicon-based oxide particles with $AlyPzOw$ (aluminum phosphate-based, $0 \leq y \leq 10$, $0 \leq z \leq 10$, $0 \leq w \leq 10$) and heat-treating the resulting mixture, a method of mixing the silicon-based oxide particles and $AlyPzOw$ with a solvent, and then reacting the resulting mixture while evaporating the solvent, and performing a coating treatment, a method of performing a coating treatment while dry-mixing the silicon-based oxide particles, $AlxOy$ (an aluminum precursor, $0 \leq x \leq 10$, $0 \leq y \leq 10$) and $PzOw$ (a P precursor, $0 \leq z \leq 10$, $0 \leq w \leq 10$) and heat-treating the resulting mixture, a method of performing a coating treatment while mixing the silicon-based oxide particles, $AlxOy$ (an aluminum precursor) and $PzOw$ (a P precursor) with a solvent, and then evaporating the solvent and reacting the resulting mixture, a method of performing a coating treatment by dry-mixing the silicon-based oxide particles and $LixAlyPzOw$ (Li-Al-P-O-based, $0 \leq x \leq 10$, $0 \leq y \leq 10$, $0 \leq z \leq 10$, $0 \leq w \leq 10$) and heat-treating the resulting mixture, or a method of mixing the silicon-based oxide particles and $LixAlyPzOw$ with a solvent, and then reacting the resulting mixture while evaporating the solvent, and performing a coating treatment. For example, $AlPO_4$ and/or $Al(PO_3)_3$ may be used as a material for the coating treatment, and a layer including $Li_3PO_4$ and/or $AlPO_4$ may be formed on the surface.

<Negative electrode>

The negative electrode according to another exemplary embodiment of the present invention may include a negative electrode active material, and here, the negative electrode active material is the same as the negative electrode active material in the above-described exemplary embodiments. Specifically, the negative electrode may include a negative electrode current collector and a negative electrode active material layer disposed on the negative electrode current collector. The negative electrode active material layer may include the negative electrode active material. Furthermore, the negative electrode active material layer may further include a binder and/or a conductive material.

The negative electrode current collector is sufficient as long as the negative electrode current collector has conductivity without causing a chemical change to the battery, and is not particularly limited. For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 6 um to 20 $\mu$m, the thickness of the current collector is not limited thereto.

The binder may include at least any one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The binder may be included in an amount of 0.1 wt% or more and 50 wt% or less, for example, preferably 0.3 wt% or more and 30 wt% or less, and more preferably 0.5 wt% or more and 20 wt% or less, based on 100 wt% of the negative electrode active material layer.

The conductive material is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; fluorocarbon powder; a metal powder such as an aluminum powder, and a nickel powder; a conductive whisker such as zinc oxide and potassium titanate; a conductive metal oxide such as titanium oxide; a conductive material such as polyphenylene derivatives, and the like.

The conductive material may be included in an amount of 0.01 wt% or more and 30 wt% or less, preferably 0.1 wt% or more and 20 wt% or less, based on 100 wt% of the negative electrode active material layer.

**<Secondary battery>**

The secondary battery according to still another exemplary embodiment of the present invention may include the negative electrode in the above-described exemplary embodiment. Specifically, the secondary battery may include a negative electrode, a positive electrode, a separator interposed between the positive electrode and the negative electrode, and an electrolyte, and the negative electrode is the same as the above-described negative electrode.

The positive electrode may include a positive electrode current collector and a positive electrode active material layer formed on the positive electrode current collector and including a positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or aluminum or stainless steel whose surface is treated with carbon, nickel, titanium, silver, and the like. Further, the positive electrode current collector may typically have a thickness of 3 to 500 um, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ( $0 \leq c1 \leq 0.33$), $LiMnO_2$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least any one selected from the group consisting of Co, Mn, Al, Cu, Fe, Mg, B and Ga, and c2 satisfies $0.01 \leq c2 \leq 0.3$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

And, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolytic solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, ethylene carbonate and propylene carbonate which are cyclic carbonates may be preferably used because they have high permittivity as organic solvents of a high viscosity and thus dissociate a lithium salt well, and when the cyclic carbonate is mixed with a linear carbonate of a low viscosity and low permittivity such as dimethyl carbonate and diethyl carbonate in an appropriate ratio, it is able to prepare an electrolyte having a high electric conductivity, therefore such a combined use is more preferable.

As the metal salt, a lithium salt may be used, the lithium salt is a material which is easily dissolved in the non-aqueous electrolyte solution, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

According to still another exemplary embodiment of the present invention, provided are a battery module including the secondary battery as a unit cell, and a battery pack including the same. The battery module and battery pack include the secondary battery having high capacity, high rate-limiting characteristics, and high cycle characteristics. The secondary battery may be used as a power source for a medium- or large-sized device selected from the group consisting of an electric vehicle, a hybrid electric vehicle, a plug-in hybrid electric vehicle, and a power storage system.

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

[Mode for Invention]

### <Preparation of negative electrode active material>

Example 1

(1) Preparation of preliminary silicon-based oxide particles (Mg doping and carbon layer formation)

By heat-treating a powder obtained by uniformly mixing a Si powder and a silicon oxide ($SiO_2$) powder at a molar ratio of 1:1 and magnesium (Mg) in a reduced pressure atmosphere, silicon oxide vapor by the Si and the silicon oxide and magnesium vapor were simultaneously generated and allowed to react in the gas phase. After a reacted composite was cooled and precipitated, the composite was pulverized with a jet mill to collect particles having an average particle diameter ($D_{50}$) of about 5 um.

The collected particles were put into a tubular furnace in the form of a tube and subjected to chemical vapor deposition (CVD) treatment under a mixed gas of argon (Ar) and methane ($CH_4$) to prepare preliminary silicon-based oxide particles on which a carbon coating layer is formed.

(2) Preparation of silicon-based oxide particles (Li doping)

Silicon-based oxide particles including Li and Mg were prepared by heat-treating the prepared preliminary silicon-based oxide particle powder and the Li metal powder at a temperature of 800°C in an inert atmosphere.

(3) Preparation of negative electrode active material (formation of surface coating layer of silicon-based oxide particles)

After the prepared silicon-based oxide particles including Li and Mg and $Al(PO_3)_3$ were mixed, a heat treatment was performed at a temperature of 600°C to form a surface coating layer composed of $AlPO_4$ and $Li_3PO_4$ on the surface of the silicon-based oxide particles including Li.

As a result of ICP analysis, the contents of Li, Al and P of the prepared negative electrode active material were 8.9 wt%, 0.15 wt% and 0.5 wt%, respectively, based on 100 wt% of the negative electrode active material.

As a result of XRF analysis, the Mg content of the prepared negative electrode active material was 0.03 wt% based on 100 wt% of the negative electrode active material.

#### Example 2

A negative electrode active material was prepared in the same manner as in Example 1, except that the Mg content of the negative electrode active material was 0.4 wt% by regulating the content of Mg during preparation of the preliminary silicon-based oxide particles.

#### Example 3

A negative electrode active material was prepared in the same manner as in Example 1, except that the Li content of the negative electrode active material was 5.6 wt% by regulating the content of Li during formation of the silicon-based oxide particles.

#### Example 4

A negative electrode active material was prepared in the same manner as in Example 1, except that the Li content and Mg content of the negative electrode active material were 5.6 wt% and 0.4 wt% by regulating the content of Mg and Li during preparation of the preliminary silicon-based oxide particles and during preparation of the silicon-based oxide particles, respectively.

#### Comparative Example 1

A negative electrode active material was prepared in the same manner as in Example 1, except that the Li content and Mg content of the negative electrode active material were 0.4 wt% and 5.6 wt% by regulating the content of Mg and Li during preparation of the preliminary silicon-based oxide particles and during preparation of the silicon-based oxide particles, respectively.

#### Comparative Example 2

A negative electrode active material was prepared in the same manner as in Example 3, except that Mg was not introduced during preparation of the preliminary silicon-based oxide particles.

#### Comparative Example 3

A negative electrode active material was prepared in the same manner as in Example 3, except that the Mg content of the negative electrode active material was 1 wt% by regulating the content of Mg during preparation of the preliminary silicon-based oxide particles.

The following Table 1 summarizes the Li content and Mg content of the negative electrode active materials of Examples 1 to 4 and Comparative Examples 1 to 3.

[Table 1]

|  | Li content (wt%) | Mg content (wt%) | Mg/Li weight ratio |
|---|---|---|---|
| Example 1 | 8.9 | 0.03 | 0.003 |
| Example 2 | 8.9 | 0.4 | 0.045 |
| Example 3 | 5.6 | 0.03 | 0.005 |
| Example 4 | 5.6 | 0.4 | 0.071 |
| Comparative Example 1 | 0.4 | 5.6 | 14 |
| Comparative Example 2 | 5.6 | 0 | 0 |
| Comparative Example 3 | 5.6 | 1 | 0.179 |

<Manufacture of negative electrode and lithium secondary battery>

Examples 1A to 4A

A uniform negative electrode slurry was prepared by together mixing the negative electrode active material prepared in Example 1 as a negative electrode active material, carbon black as a conductive material, and carboxymethylcellulose (CMC) and styrene butadiene rubber (SBR) as a binder with a solvent, that is, water ($H_2O$) at a weight ratio of 80 : 10 : 4 : 6. One surface of the copper current collector was coated with the prepared negative electrode slurry, and the copper current collector was dried and rolled, and then punched in a predetermined size to manufacture a negative electrode.

Li metal was used as a counter electrode, and after a polyolefin separator was interposed between the negative electrode and Li metal, an electrolyte in which 1 M $LiPF_6$ was dissolved into a solvent in which ethylene carbonate (EC) and diethyl carbonate (DEC) were mixed at a volume ratio of 30:70 was injected, thereby manufacturing a coin-type half battery in Example 1A.

Negative electrodes and coin-type half batteries in Examples 2A, 3A and 4A were manufactured in the same manner as in Example 1A, except that as negative electrode active materials, the negative electrode active materials in Examples 2, 3 and 4 were used, respectively.

**Comparative Examples 1A to 3A**

Negative electrodes and coin-type half batteries in Comparative Examples 1A to 3A were manufactured in the same manner as in Example 1A, except that as negative electrode active materials, the negative electrode active materials in Comparative Examples 1 to 3 were used, respectively.

<Evaluation of initial efficiency, cycle characteristics and change rate in electrode thickness of secondary battery>

By charging and discharging the secondary batteries in Examples 1A to 4A and Comparative Examples 1A to 3A, the initial efficiency, cycle characteristics and electrode thickness change rate were evaluated, and are shown in the following Table 2.

The batteries manufactured in Examples 1A to 4A and Comparative Examples 1A to 3A were charged at a constant current (CC) of 0.1 C at 25°C until the voltage became 5 mV and then charged at a constant voltage (CV) until the charging current became 0.005 C (cut-off current), so as to perform the first charging. Thereafter, the batteries were left to stand for 20 minutes, and then discharged at a constant current (CC) of 0.1 C until the voltage became 1.5 V to confirm the initial efficiency.

Thereafter, the cycle characteristics were evaluated by repeating charging and discharging at 0.5 C up to 40 cycles to measure the capacity retention rate. After the cycle characteristic evaluation was completed, the 41st cycle was terminated in the charged state, the thickness was measured by disassembling the battery, and then the change rate in the electrode thickness was calculated.

The initial efficiency (%) was derived from the results during 1st charge/discharge by the following equation.

```
Initial efficiency (%) = {discharge capacity (mAh/g)

 of negative electrode active material / charge capacity

(mAh/g) of negative electrode active material}×100
```

The capacity retention rate and the change rate in the electrode thickness were derived by the following calculation, respectively.

```
Capacity retention rate (%) = (40th discharge

capacity / 1st discharge capacity)×100

Change rate (%) in thickness of electrode =

{(negative electrode thickness after charging 41 times -

initial negative electrode thickness) / initial negative

electrode thickness}×100
```

[Table 2]

| Battery | Initial efficiency (%) | Capacity retention rate (%) | Change rate (%) in electrode thickness |
|---|---|---|---|
| Example 1A | 91 | 83 | 49 |
| Example 2A | 92 | 82 | 50 |
| Example 3A | 87 | 86 | 47 |
| Example 4A | 88 | 84 | 48 |
| Comparative Example 1A | 81 | 80 | 53 |
| Comparative Example 2A | 86 | 81 | 52 |
| Comparative Example 3A | 88 | 79 | 54 |

Referring to Table 2, it can be confirmed that the case of secondary batteries including the negative electrode active materials in Examples 1 to 4 (Examples 1A to 4A) has the overall effect of improving the initial efficiency, improving the capacity retention rate and reducing the change rate in electrode thickness compared to in the case of using the negative electrode active materials in Comparative Examples 1 to 3 (Comparative Examples 1A to 3A).

Specifically, the negative electrode active material of Comparative Example 1 is a case where the content of Mg was higher than the content of Li, the discharge capacity and initial efficiency could not be efficiently increased because the Li content was low, and the thickness expansion during charging/discharging could not be easily controlled because the Mg content was high. Accordingly, it can be confirmed that the secondary battery of Comparative Example 1A has lower initial efficiency and capacity retention rate and a larger change rate in electrode thickness than those of Examples 1A to 4A having a larger content of Li than the content of Mg.

In addition, the negative electrode active material of Comparative Example 2 does not include Mg. There is no increase in initial efficiency due to the inclusion of Mg, and Mg which controls the thickness expansion during charging/discharging is not included. Therefore, it can be confirmed that the secondary battery of Comparative Example 2A has lower initial efficiency and capacity retention rate and a larger change rate in electrode thickness than those of Examples 3A and 4A having the same Li content.

Furthermore, the negative electrode active material of Comparative Example 3 is a case where the content of Mg is 1 wt%, and cannot effectively suppress thickness expansion during charging/discharging. Therefore, it can be confirmed that the secondary battery of Comparative Example 3A has an initial efficiency similar to, but has a lower capacity retention rate and a larger change rate in electrode thickness than those of Examples 3A and 4A having the same Li content.

Additionally, the active materials of Examples 1 and 2 are cases where the Mg content is the same as, but the Li content is larger than the negative electrode active materials of Examples 3 and 4, respectively. Examples 1 and 2 may improve the initial efficiency by effectively suppressing the irreversible reaction due to the high Li content. However, due to the relatively high Li content, the negative electrode active material is structurally unstable, so that Examples 1 and 2 are somewhat inferior in terms of capacity retention rate and change in electrode thickness. After all, it can be confirmed that Examples 1A and 2A are superior in terms of initial efficiency, and Examples 3A and 4A are superior in terms of capacity retention rate and change rate in electrode thickness.

By appropriately including Li in the negative electrode active material according to the present invention, the initial efficiency of a battery can be increased by reacting Li with $SiO_2$ in advance, which causes Li to be irreversible during initial charging and discharging. Furthermore, by additionally including Mg, the swelling characteristics and capacity retention rate can be improved compared to the case of doping with only Li.

That is, according to exemplary embodiments of the present invention, not only the initial efficiency but also the swelling characteristics can be improved by including the contents of Li and Mg within a specific range.

## Claims

1. A negative electrode active material comprising silicon-based oxide particles, wherein the silicon-based oxide particles comprise Li and Mg, a content of Li is larger than a content of Mg, and a content of Mg is more than 0 wt% and 0.5 wt% or less based on 100 wt% of the negative electrode active material.

2. The negative electrode active material of claim 1, wherein the content of Li is 1 wt% or more and 15 wt% or less based on 100 wt% of the negative electrode active material.

3. The negative electrode active material of claim 1, wherein the silicon-based oxide particles further comprise at least one of a carbon layer; an aluminum phosphate layer; a lithium phosphate layer; and an aluminum phosphate and lithium phosphate layer provided on at least a part of the surface thereof.

4. The negative electrode active material of any one of claims 1 to 3, wherein the Mg is present as a Mg compound phase comprising at least one selected from the group consisting of Mg silicates, Mg silicides and Mg oxides.

5. The negative electrode active material of any one of claims 1 to 3, wherein the Li is present as a Li compound phase comprising one or more selected from the group consisting of $Li_2SiO_3$, $Li_2Si_2O_5$, $Li_3SiO_3$ and $Li_4SiO_4$.

6. The negative electrode active material of any one of claims 1 to 3, wherein the silicon-based oxide particles have an average particle diameter of ($D_{50}$) of 1 um to 30 um.

7. The negative electrode active material of any one of claims 1 to 3, wherein the silicon-based oxide particles have a BET specific surface area of 0.5 $m^2$/g to 60 $m^2$/g.

8. The negative electrode active material of any one of claims 1 to 3, wherein the silicon-based oxide particles comprise Si crystal grains having a particle diameter of 1 nm to 15 nm.

9. A negative electrode comprising the negative electrode active material according to any one of claims 1 to 3.

10. A secondary battery comprising the negative electrode of claim 9.

<div align="center">

**INTERNATIONAL SEARCH REPORT**

</div>

| International application No. |
| --- |
| **PCT/KR2022/018619** |

| **A.** | **CLASSIFICATION OF SUBJECT MATTER** |
| --- | --- |
| | **H01M 4/48**(2010.01)i; **H01M 4/36**(2006.01)i; **H01M 10/052**(2010.01)i; **H01M 4/02**(2006.01)i |

According to International Patent Classification (IPC) or to both national classification and IPC

| **B.** | **FIELDS SEARCHED** |
| --- | --- |

Minimum documentation searched (classification system followed by classification symbols)

H01M 4/48(2010.01); H01M 10/052(2010.01); H01M 10/0525(2010.01); H01M 4/131(2010.01); H01M 4/485(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 활물질(negative electrode active material), 실리콘(silicon), 리튬(lithium), 마그네슘(magnesium)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | KR 10-2290961 B1 (LG ENERGY SOLUTION, LTD.) 20 August 2021 (2021-08-20)<br>See claims 1, 3, 5-8, 10, 13, 20 and 21; and paragraphs [0035] and [0090]-[0095]. | 1-10 |
| A | KR 10-2019-0140610 A (LG CHEM, LTD.) 20 December 2019 (2019-12-20)<br>See claims 1-9. | 1-10 |
| A | KR 10-2019-0104895 A (LG CHEM, LTD.) 11 September 2019 (2019-09-11)<br>See entire document. | 1-10 |
| A | KR 10-2021-0022239 A (DAE JOO ELECTRONIC MATERIALS CO., LTD.) 03 March 2021 (2021-03-03)<br>See entire document. | 1-10 |
| A | KR 10-2021-0025924 A (NEWTECH ENERGY CO., LTD.) 10 March 2021 (2021-03-10)<br>See entire document. | 1-10 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 March 2023** | **23 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2" align="center"><strong>INTERNATIONAL SEARCH REPORT</strong><br><strong>Information on patent family members</strong></td><td colspan="2">International application No.<br><br><strong>PCT/KR2022/018619</strong></td></tr>
<tr><td align="center">Patent document<br>cited in search report</td><td align="center">Publication date<br>(day/month/year)</td><td align="center">Patent family member(s)</td><td align="center">Publication date<br>(day/month/year)</td></tr>
<tr><td>KR 10-2290961 B1</td><td>20 August 2021</td><td>CN 111466045 A</td><td>28 July 2020</td></tr>
<tr><td></td><td></td><td>CN 111466045 B</td><td>08 July 2022</td></tr>
<tr><td></td><td></td><td>EP 3709405 A1</td><td>16 September 2020</td></tr>
<tr><td></td><td></td><td>EP 3709405 A4</td><td>20 January 2021</td></tr>
<tr><td></td><td></td><td>KR 10-2019-0092311 A</td><td>07 August 2019</td></tr>
<tr><td></td><td></td><td>US 2020-0388833 A1</td><td>10 December 2020</td></tr>
<tr><td></td><td></td><td>WO 2019-151774 A1</td><td>08 August 2019</td></tr>
<tr><td>KR 10-2019-0140610 A</td><td>20 December 2019</td><td>CN 111919316 A</td><td>10 November 2020</td></tr>
<tr><td></td><td></td><td>EP 3764441 A1</td><td>13 January 2021</td></tr>
<tr><td></td><td></td><td>EP 3764441 A4</td><td>19 May 2021</td></tr>
<tr><td></td><td></td><td>JP 2021-518044 A</td><td>29 July 2021</td></tr>
<tr><td></td><td></td><td>JP 7128290 B2</td><td>30 August 2022</td></tr>
<tr><td></td><td></td><td>KR 10-2321503 B1</td><td>02 November 2021</td></tr>
<tr><td></td><td></td><td>US 2021-0028438 A1</td><td>28 January 2021</td></tr>
<tr><td></td><td></td><td>WO 2019-240496 A1</td><td>19 December 2019</td></tr>
<tr><td>KR 10-2019-0104895 A</td><td>11 September 2019</td><td>CN 111466044 A</td><td>28 July 2020</td></tr>
<tr><td></td><td></td><td>CN 111466044 B</td><td>14 June 2022</td></tr>
<tr><td></td><td></td><td>EP 3709406 A1</td><td>16 September 2020</td></tr>
<tr><td></td><td></td><td>EP 3709406 A4</td><td>30 December 2020</td></tr>
<tr><td></td><td></td><td>KR 10-2264739 B1</td><td>15 June 2021</td></tr>
<tr><td></td><td></td><td>US 2020-0350571 A1</td><td>05 November 2020</td></tr>
<tr><td></td><td></td><td>WO 2019-168352 A1</td><td>06 September 2019</td></tr>
<tr><td>KR 10-2021-0022239 A</td><td>03 March 2021</td><td>CN 114600271 A</td><td>07 June 2022</td></tr>
<tr><td></td><td></td><td>EP 4020621 A1</td><td>29 June 2022</td></tr>
<tr><td></td><td></td><td>EP 4020621 A4</td><td>23 November 2022</td></tr>
<tr><td></td><td></td><td>JP 2022-546284 A</td><td>04 November 2022</td></tr>
<tr><td></td><td></td><td>KR 10-2021-0022237 A</td><td>03 March 2021</td></tr>
<tr><td></td><td></td><td>KR 10-2021-0022238 A</td><td>03 March 2021</td></tr>
<tr><td></td><td></td><td>US 2022-0302428 A1</td><td>22 September 2022</td></tr>
<tr><td></td><td></td><td>WO 2021-034097 A1</td><td>25 February 2021</td></tr>
<tr><td>KR 10-2021-0025924 A</td><td>10 March 2021</td><td>KR 10-2259335 B1</td><td>01 June 2021</td></tr>
</table>

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210164661
- KR 1020220035378
- KR 1020190030676